# EUROPÄISCHE PATENTANMELDUNG

(11) **EP 0 609 865 A1**
(43) Veröffentlichungstag der Anmeldung: **10.08.1994**
(21) Anmeldenummer: 94101567.9
(22) Anmeldetag: 02.02.1994
(51) Int. Cl.: C05F 17/00

(54) **Verfahren zum Herstellen von organischem bzw. organisch-mineralischem Dünger**

(30) Priorität: 02.02.1993 DE 4311384; 02.12.1993 DE 4341175
(71) Anmelder: Grube, Günter, D-26919 Brake (DE); Schauer, Frieder, D-17493 Greifswald (DE)
(72) Erfinder: Grube, Günter, D-26919 Brake (DE); Schauer, Frieder, D-17493 Greifswald (DE)
(74) Vertreter: Hoormann, Walter, Dr.-Ing.

(57) **Zusammenfassung**

Die Erfindung betrifft ein Verfahren zum Herstellen von organischem Dünger bzw. organisch-mineralischem (Misch-)Dünger aus Pflanzensubstanz enthaltendem Rohgut, wobei das Rohgut einen bis zu 51 Gew.-% ausmachenden, aus Ganzpflanzen od. dgl. bestehenden ersten Anteil sowie einen zweiten Anteil aus aufbereiteten oder nicht aufbereiteten (Klär)-Schlämmen aufweist und durch Einsatz Von Mikroorganismen kompostiert wird.

## Beschreibung

Die Erfindung betrifft ein Verfahren zum Herstellen von organischem Dünger bzw. organisch-mineralischem (Misch-)Dünger aus Pflanzensubstanz enthaltendem Rohgut.

Der vorliegenden Erfindung liegt die Aufgabe zugrunde, einen preisgünstigen Dünger unter möglichst geringem Aufwand von Primärenergie einerseits und (insbesondere industriell erzeugten) Rohstoffen andererseits mit der Möglichkeit einer Verwendung nachwachsender Rohstoffe sowie organischer Nebenprodukte zu erzeugen, wobei dieser Dünger so hergestellt werden bzw. beschaffen sein soll, daß er den Vorgaben des Düngemittelrechts entspricht.

Erfindungsgemäß wird diese Aufgabe dadurch gelöst, daß das Rohgut einen bis zu 51 Gew.-% ausmachenden, aus Ganzpflanzen od. dgl. bestehenden ersten Anteil sowie einen zweiten Anteil aus aufbereiteten oder nicht aufbereiteten (Klär-)Schlämmen aufweist und durch Einsatz von Mikroorganismen kompostiert wird.

Dabei wird der vorzugsweise aus struktur- und/oder nährstoffreichen, schadstoffarmen, eiweißreichen, getrockneten Ganzpflanzen bestehende erste Anteil des Rohgutes vorzugsweise mit nährstoffreichem, entwässertem (Klär-)Schlamm kompostiert.

Zur Verbesserung des Sauerstoffzutritts an das Verrottungsgut ist es weiterhin zweckmäßig, zerkleinerte, strukturgebende Zuschlagstoffe mit einem geringen Anteil an Feinteilen einzusetzen, die in Form von Holzhäcksel, Baum- oder Strauchschnitt oder auch bevorzugt als geeignet geformte Kunststoffkörper zugegeben werden können, welche einen möglichst hoben Anteil des stickstoffverzehrenden, ligninhaltigen Strukturmaterials auf Holzbasis ersetzen sollen und können. Darüber hinaus schaffen sie die Möglichkeit, erhebliche Mengen an Kunststoffen zu recyceln.

Es ist von Vorteil, wenn die Ganzpflanzen direkt bei der Ernte in ihrer Struktur gefasert werden. Diese Maßnahme beschleunigt nicht nur den Trocknungsprozeß nach dem Abmähen, sondern schafft durch Vergrößerung der Oberfläche zugleich ideale Bedingungen für Bakterien. Darüber hinaus erhöht sich die Saugfähigkeit der Ganzpflanzen durch ein Fasern/Zerkleinern erheblich.

Bevorzugt werden als Ganzpflanzen Gräser und/oder Getreide, insbesondere Weizen, Gerste, Roggen, Hafer, Triticale, Menggetreide, Leguminosen u. dgl. eingesetzt. Die Ganzpflanzen können wenigstens teilweise durch Stroh od. dgl. ersetzt werden.

Im Anschluß an den Kompostierungsprozeß erfährt der Reifekompost, sofern er nicht bis auf 80-85 % TS nachgetrocknet wird, bis zu seinem Einsatz als definierter, mit Mineraldünger aufgemischter Fertigdünger eine weitere Umsetzung. Damit verbunden ist eine Veränderung der Nährstoffgehalte und der organischen Masse. Daher wird der Fertigkompost erst unmittelbar vor seinem Einsatz als Organomineraldünger auf seine pflanzenverfügbaren Nährstoffe hin analysiert und auf ein auf die Nährstoffanforderung der zu düngenden Kulturpflanzen ausgerichtetes Niveau mit mineralischen Nährstoffen aufgemischt. Die Zumischung des Nährstoffes Stickstoff muß aufgrund des hohen pH-Wertes, der in solcherart Komposten zu erwarten ist, durch Kaliumnitrat, Calciumnitrat oder einen anderen, geeigneten nitrathaltigen Dünger erfolgen. Eine Zumischung von preisgünstigen Ammoniumdüngern wie z.B. Harnstoff ist nicht möglich, da es zu ammoniakalischen Stickstoffverlusten käme.

Nährstoffreiche, getrocknete, schadstoffarme Ganzpflanzen haben bei einer Düngerherstellung u. a./insbesondere folgende Bedeutung:
- Sie haben einen etwa gleichmäßig hohen, berechenbaren Anteil an Nährstoffen. Dieses ist wichtig für einen definierten Dünger, dessen Inhaltsstoffe und Wirkung auf die Pflanzen deklariert werden sollen bzw. müssen;
- sie haben einen relativ hohen Kaliumgehalt. Schlämme, z.B./insbesondere Klärschlämme, haben in der Regel extrem niedrige Kaliumgehalte. Da organische Dünger oder organischmineralische (Misch-)Dünger laut Düngemittelrecht einen Mindestgehalt an Kalium enthalten müssen, können Ganzpflanzen auch insoweit einen Ausgleich schaffen;
- sie haben - im Gegensatz zu entwässerten Schlämmen - in der Regel äußerst geringe Belastungen an Schwermetallen. Durch Hinzufügen von Ganzpflanzen wird mithin bezüglich derartiger Schlämme ein "Verdünnungseffekt" erreicht. Die im Düngemittelrecht vorgeschriebenen Werte können dadurch eingehalten werden; und
- Ganzpflanzen mit einem TS-Gehalt von ca. 80 bis 85 % üben eine Saugfunktion aus. Entwässerte Schlämme haben in der Regel einen TS-Gehalt von ca. 20 %. Ein günstiger Feuchtigkeitsbereich für einen Kompostiervorgang liegt bei ca. 45 bis 55 %. Getrocknete, gefaserte Ganzpflanzen schaffen also insoweit einen Ausgleich.

Das erfindungsgemäße Verfahren weist u. a./weiterhin den Vorteil auf, daß der auf diese Weise hergestellte hochwertige, standardisierte, organisch-mineralische Dünger einen erheblichen Teil des derzeit eingesetzten, unter hohem Energieaufwand hergestellten Mineraldüngers ersetzen kann.

Hervorzuheben ist weiterhin bei der Anwendung eines erfindungsgemäß erzeugten organischen Düngers oder organisch-mineralischen (Misch-)Düngers, daß im Gegensatz zu vielen industriellen Stickstoffdüngern keine Kalkauszehrung des Bodens entsteht. Auch zeichnet sich der erfindungsgemäße organische Dünger bsw. organisch-mineralische (Misch-)Dünger dadurch aus, daß er durch die organischen Anteile im Hinblick auf Bodengefüge, mikrobielle Aktivität und Nährstoffverfügbarkeit bodenverbessernd wirkt.

Das erhaltene Endprodukt zeichnet sich weiterhin durch hygienische Unbedenklichkeit, hohe Nährstoffverfügbarkeit, einen definierten Anteil wertgebender Inhaltsstoffe, definierte Wirkungsweise sowie pH-Neutralität aus. Durch die Anwendung des Organomineraldüngers ist im Vergleich zu einer Düngerapplikation in rein mineralischer Form aufgrund des Humateffektes eine verbesserte Nährstoffverfügbarkeit gegeben.

Ein weiterer Vorteil des erfindungsgemäßen Verfahrens besteht in der bestmöglichen Verwertung von (entwässerten) Molkerei-, Industrie- bzw. Klärschlämmen, die anderenfalls kostspielig durch Verbrennung oder Deponierung entsorgt werden müßten.

Die unterschiedlichen Ausgangsstoffe werden nach Beschaffenheit und Erfordernissen gemischt und in Form von Mieten zur Verrottung aufgesetzt. Die Vorrotte soll eine Hygienisierung dem Materials und den Umbau der leicht abbaubaren Komponenten durch Um- und Abbau bewirken.

In der anschließenden Haupt- und Nachrotte müssen sowohl eine ausreichende Sauerstoffversorgung als auch ein optimaler Wassergehalt gewährleistet sein. Um einen kontrollierten Rotteverlauf zu gewährleisten, werden die Mieten in Abhängigkeit von verschiedenen Rotteparametern (wie Temperatur und Feuchte) gezielt umgesetzt. Um ein Vernässen des Materials durch starke Regenfälle zu vermeiden, ist eine Abdeckung während der Kompostierungs- und Lagerungsseit zu empfehlen.

Beim Kompostieren entstehen bei entsprechender Sauerstoffzufuhr Temperaturen von etwa 60 bis 70°C. Derart hohe Temperaturen sind nur kurzfristig für eine Hygienisierung erforderlich. Für die Nachrotte ist der Temperaturbereich von ca. 35 bis 50°C optimal. Diese Temperaturdifferenzen zwischen ca. 35 bis 50°C und ca. 60 bis 70°C können beispielsweise/insbesondere für die folgenden Zwecke genutzt werden:
- Vorzeitiger Abbruch des Kompostierungsvorganges durch Feuchtigkeitsentzug und anschließendes Absieben der kohlenstoffhaltigen Anteile. Dadurch wird möglichst viel Stickstoff in ungebundener Form (d. h. als Ammonium bzw. Nitrat) im Produkt erhalten;
- Trocknen des Endproduktes bis auf ca. 20 % Feuchte; und
- Verkürzen der Rottezeit. Nach dem Mischen von relativ feuchten Schlämmen, Ganzpflanzen und Strukturmaterial kann die Phase der Selbsterhitzung verkürzt werden, wenn (Prozeß-)Wärme in die zu kompostierende Masse eingebracht wird.

Für die beschriebenen Zwecke kann auch Wärme aus Primärenergie eingesetzt werden.

Die strukturgebenden Zuschlagstoffe werden bevorzugt vor Ende des Kompostiervorganges herausgesiebt, um einen Kompost hoher Qualität und hohen Nährstoffgehaltes zu erhalten. Der Kompostiervorgang sollte durch Austrocknen oder Absieben der kohlenstoffhaltigen Strukturfraktion abgebrochen werden, wenn keine (oder nur noch unwesentliche) Festlegungen von Stickstoff im Boden mehr zu erwarten sind, nachdem der Dünger angewendet wurde.

Ziel bei der Kompostierung der genannten Ausgangsstoffe ist es, einen möglichst nährstoffhaltigen Kompost mit wesentlichen Anteilen an freiem, pflanzenverfügbaren Stickstoff zu erhalten. Eingangsstoffe sollen deshalb ein enges C/N-Verhältnis von vorzugsweise maximal ca. bis 1:20 enthalten. Das Endprodukt soll entweder für sich als definierter, organischer Dünger oder als Basisstoff für einen organisch-mineralischen (Misch-)Dünger nach den Kriterien des Düngemittelrechts mit etwa neutralem pH-Wert bewertet werden.

Bei den letztgenannten Düngern werden - entsprechend den Anforderungen der zu düngenden Pflanzen bzw. des Marktes - Nährstoffe in mineralischer Form zugemischt. Endprodukte können marktgerecht lose, in palettierter Form, gesackt und deklariert abgegeben werden.

Frei verfügbarer Stickstoff wird bei klassischen Komposten oder klassischen Biokomposten als unerwünscht angesehen. Deshalb strebt man bei der Kompostherstellung ein relativ weites C/N-Verhältnis von ca. 1:20 bis ca. 1:80 an, bei dem der Stickstoff weitgehend für die Umsetzung der Kohlenstoffe verbraucht wird. Reststickstoff ist in derartigen Komposten fast ausschließlich in organisch gebundener Form (also schwer verfügbar) vorhanden. In dem vorliegenden Verfahren wird ein hoher freier Stickstoffanteil im Fertigkompost angestrebt.

Durch die Verwendung spezieller Mikroorganismen (Bakterien, insbesondere aus den Gattungen Pseudomonas und Sphingomonas, sowie Pilze, insbesondere aus den Gattungen Phanerochaetae, Paecilomyces, Trichosporon, Candida) ist es möglich, mit organischen Schadstoffen belastete (Klär-)Schlämme in den Kompostierungsprozeß einzubeziehen, die dann im Verlauf der Kompostierung von diesen Schadstoffen befreit werden. Als Hauptschadstoffe kommen hier vor allem dioxinartige Stoffe wie Biarylether-Verbindungen, Biphenyle (jeweils chloriert und nicht chloriert), Phenole und aromatische Säuren in Betracht.

Weitere bevorzugte Ausgestaltungen der vorliegenden Erfindung sind in Unteransprüchen beschrieben.

Die in der vorstehenden Beschreibung und in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Herstellen von organischem Dünger bzw. organisch-mineralischem (Misch-)Dünger aus Pflanzensubstanz enthaltendem Rohgut, dadurch gekennzeichnet, daß das Rohgut einen bis zu 51 Gew.-% ausmachenden, aus Ganzpflanzen od. dgl. bestehenden ersten Anteil sowie einen zweiten Anteil aus aufbereiteten oder nicht aufbereiteten (Klär-)Schlämmen aufweist und durch Einsatz von Mikroorganismen kompostiert wird.

2. Verfahren nach Anspruch 1, dadurch gekennzeichnet, daß getrocknete Ganzpflanzen eingesetzt werden.

3. Verfahren nach Anspruch 1 oder 2, dadurch gekennzeichnet, daß dem Rohgut strukturgebende Zuschlagstoffe zugesetzt werden.

4. Verfahren nach Anspruch 3, dadurch gekennzeichnet, daß Holzhäcksel oder Baum-/Strauchschnitt als strukturgebende Zuschlagstoffe verwendet werden.

5. Verfahren nach Anspruch 3, dadurch gekennzeichnet, daß Kunststoffkörper als strukturgebende Zuschlagstoffe verwendet werden.

6. Verfahren nach einem der vorhergehenden Ansprüche, dadurch gekennzeichnet, daß Gräser und/oder Getreide als Ganzpflanzen eingesetzt werden.

7. Verfahren nach Anspruch 6, dadurch gekennzeichnet, daß zusätzlich Leguminosen als Ganzpflanzen eingesetzt werden.

8. Verfahren nach Anspruch 6, dadurch gekennzeichnet, daß eine oder mehrere der Arten Weichweisen, Gerate, Roggen, Hafer, Triticale, Menggetreide, Leguminosen als Ganzpflanzen eingesetzt werden.

9. Verfahren nach einem der vorhergehenden Ansprüche, dadurch gekennzeichnet, daß die Ganzpflanzen wenigstens teilweise durch Stroh ersetzt werden.

10. Verfahren nach einem der vorhergehenden Ansprüche, dadurch gekennzeichnet, daß die Ganzpflanzen vor der Zugabe zu dem zu kompostierenden Rohgut, insbesondere direkt nach der Ernte, in ihrer Struktur gefasert werden.

11. Verfahren nach einem der vorhergehenden Ansprüche, dadurch gekennzeichnet, daß der (aufbereitete) (Klär-)Schlamm wenigstehe teilweise durch Geflügelmist oder andere nährstoffreiche Stoffe wie organische Rückstände und/oder Nebenprodukte ersetzt wird.

12. Verfahren nach einem der vorhergehenden Ansprüche, dadurch gekennzeichnet, daß die strukturgebenden Zuschlagstoffe vor Ende des Kompostiervorgangs abgesiebt werden.

13. Verfahren nach einem der vorhergehenden Ansprüche, dadurch gekennzeichnet, daß die Verrottung in Mieten durchgeführt wird.

14. Verfahren nach Anspruch 13, dadurch gekennzeichnet, daß die Mieten mit einer sauerstoffdurchlässigen und/oder wasserabweisenden Folie wenigstens teilweise abgedeckt werden.

15. Verfahren nach einem der vorhergehenden Ansprüche, dadurch gekennzeichnet, daß dem Fertigkompost Mineraldünger, zum Stickstoffausgleich insbesondere Kaliumnitrat und/oder Kalziumnitrat und/oder ein anderer nitrathaltiger Dünger zugeführt wird.

16. Verfahren nach einem der vorhergehenden Ansprüche, dadurch gekennzeichnet, daß der Fertigkompost/Dünger nachgetrocknet und/oder pelletiert wird.

17. Verfahren nach Anspruch 16, dadurch gekennzeichnet, daß der Fertigkompost/Dünger bis auf eine Feuchte von unter 20 % getrocknet wird.

18. Verfahren nach Anspruch 16 oder 17, dadurch gekennzeichnet, daß zum Abbruch des Kompostiervorgangs oder zum Trocknen des Produkte Prozeßwärme aus dem Verrottungsverfahren und/oder Wärme aus Primärenergie eingesetzt wird.

19. Verfahren nach einem der vorhergehenden Ansprüche, dadurch gekennzeichnet, daß die eingesetzten (Klär-)Schlämme mit einem oder mehreren der Schadstoffe Biarylether-Verbindungen, Biphenyle (jeweils chloriert und nicht chloriert), Phenole und aromatische Säuren, belastet sind, wobei zum Abbau der Schadstoffe eine oder mehrere Arten folgender Mikroorganismen eingesetzt werden: Bakterien der Gattung Pseudomonas und Sphingomonas, Pilze der Gattung Phanerochaetae, Paecilomyces, Trametes, Trichosporon, Candida.
